# EUROPÄISCHE PATENTANMELDUNG

(11) **EP 1 247 495 A2**
(43) Veröffentlichungstag der Anmeldung: **09.10.2002**
(21) Anmeldenummer: 02007469.6
(22) Anmeldetag: 02.04.2002
(51) Int. Cl.: A61C 1/05

(54) **Zahnärztliches Instrument mit einer Düsenanordnung**

(30) Priorität: 02.04.2001 DE 10116418
(71) Anmelder: Sirona Dental Systems GmbH, 64625 Bensheim (DE)
(72) Erfinder: Nagy, Karoly, Prof. Dr., 52070 Aachen (DE); Franetzki, Manfred, Dr., 64625 Bensheim (DE); Worschischek, Rainer, 64653 Lorsch (DE)
(74) Vertreter: Sommer, Peter

(57) **Zusammenfassung**

Zahnärztliches Instrument, mit einem aktiven Werkzeug zur Bearbeitung von insbesondere Zahnhartsubstanz, bei dem zur Kühlung der Präparationsstelle eine Kühlflüssigkeit verwendet wird, welche auf die Präparationsstelle ausgerichtet von einer Düsenanordnung abgegeben wird, wobei die Düsenanordnung über den Umfang verteilte, einzelne oder zusammenhängende Austrittsöffnungen für die Kühlflüssigkeit aufweist und wobei der Volumenanteil an einem Kühlgas vernachlässigbar oder sogar Null ist. Die Austrittsöffnungen weisen einen Austrittswinkel für den Strahl der Kühlflüssigkeit auf, welcher über den Umfang der Düsenanordnung gesehen mindestens zwei unterschiedliche Werte annimmt.

## Beschreibung

### Technisches Gebiet

Die Erfindung betrifft ein zahnärztliches Instrument mit einem aktiven Werkzeug zur Bearbeitung von insbesondere Zahnhartsubstanz, bei dem für die Kühlung der Präparationsstelle ein Kühlflüssigkeit verwendet wird, welche auf die Präparationsstelle ausgerichtet von einer Düsenanordnung abgegeben wird. Die Düsenanordnung weist über den Umfang verteilte, einzelne oder zusammenhängende Austrittsöffnungen mit einem Austrittswinkel für einen Strahl der Kühlflüssigkeit auf und der Volumenanteil an einem Kühlgas ist vernachlässigbar oder sogar Null.

Beim Bearbeiten von Zähnen, insbesondere beim mechanischen Abtragen von Zahnhartsubstanz, mit aktiven Werkzeugen, wie z. B. rotierende, oszillierende Werkzeuge oder Laser, ist es notwendig, die Präparationsstelle zur Vermeidung von Wärmeschäden ausreichend zu kühlen.

### Stand der Technik

Diese Kühlung geschieht heute in der Regel, zumindest bei allen rotierenden Instrumenten, durch Zufuhr eines Wasser/Luft-Gemisches als Spray (DE-23 55 961). Der Spray wird dabei in einer oder mehreren Düsen im Kopfgehäuse des Instruments erzeugt, indem ein relativ kleiner Volumenstrom Wasser und ein demgegenüber sehr viel größerer Volumenstrom Luft miteinander vermischt werden. Das Verhältnis der Volumenströme Luft zu Wasser beträgt dabei etwa 100:1. Die so dem Kühlwasser in relativ großer, Menge zugegebene Luft trägt bei einer Präparation die Spraywolke als Aerosol, aber auch aus dem Patientenmund mitgerissene Keime in die benachbarte Umgebung. Somit besteht die Gefahr einer Verkeimung der Umgebung des Arbeitsfeldes und damit eine direkte Belastung für das behandelnde Personal und auch des nachfolgenden Patienten.

Es ist bekannt, das Werkzeug und die Präparationsstelle mit einem auf das Werkzeug gerichteten Wasserstrahl zu kühlen, wobei eine nachträgliche Ausrichtung des Wasserstrahls genau auf die Präparationsstelle nach dem Auftreten von Verkalkungen oder Verstopfungen der kleinen Düsenöffnungen an der Wasseraustrittsstelle als Problem erkannt wurde (CH-A-557 673). Problematisch ist weiterhin, dass sich um schnell rotierende Werkzeuge ein Luftkissen bildet, an dem der Wasserstrahl abgelenkt wird, so dass es nicht selbstverständlich ist, das Werkzeug oder auch die Präparationsstelle optimal zu treffen und damit zu kühlen.

Aus der EP 0 547 468 A2 ist ein zahnärztliches Instrument bekannt, bei dem zur Kühlung der Präparationsstelle Wasser verwendet wird, wobei die Düsenanordnung so gestaltet ist, dass das Wasser in Form eines das Werkzeug umgebende Wassermantels austritt. Dabei wird nur mit Wasser gekühlt, bzw. mit einem extrem niedrigen Anteil an Luft.

Weitere Beispiele für bekannte Maßnahmen zur Kühlung der Präparationsstelle sind die CH-A-557 673, die DE-A-2 355 961 und US-A-3 525 154. In dem erstgenannten Dokument wird ein zahnärztliches Handstück mit mindestens einer eingebauten Kühlmittelleitung beschrieben, bei der in Nähe der Werkzeugaufnahme mindestens eine ins Freie mündende und auf das Werkzeug gerichtete rohrförmige Spritzdüse vorgesehen ist. Über die Spritzdüse kann Wasser, auch ein aus Wasser/Luft-Gemisch bestehender Spray oder auch nur Kühlluft allein auf das Werkzeug geleitet werden. Die Spritzdüse weist dabei ein Rohreinsatz mit zwei Düsenkanälen auf, von denen einer schräg zur Achse des Rohreinsatzes verläuft. Dadurch wird die Möglichkeit der Einstellung mehrerer Sprühstrahlrichtungen des aus der Düse austretenden Kühlmittels ermöglicht, so dass es besonders einfach ist, durch Verdrehen des Rohreinsatzes den Sprühstrahl auf den Endbereich längerer oder kürzerer Werkzeuge einzustellen.

Bei der aus der DE-A-2 355 961 bekannten Einrichtung wird ein Mehrstrahl-Kühlsystem beschrieben, bei welchem die Kühlflüssigkeit zunächst in eine Ringkammer eines stirnseitig des Instrumentenkopfgehäuses gehalterten Ringes geleitet. Sie tritt dort aber dann über drei am Umfang des Ringes angeordnete Öffnungen aus.

Eine ähnliche Anordnung ist in der US-A-3 525 154 beschrieben. In unmittelbarer Umgebung des Werkzeuges sind in unterschiedlichen radialen Abständen zum Werkzeug Austrittsöffnungen vorgesehen, welche zu zwei unterschiedlichen Kühlmittelkreisläufen gehören. Die Austrittsöffnungen können zum Werkzeug hin geneigt sein. Weitere Ausführungen hierzu werden nicht gemacht.

Der Erfindung liegt die Aufgabe zugrunde, auch bei Verwendung unterschiedlicher Bohrerlängen den Aerosolaustritt aus dem Patientenmund aufgrund der Wasserkühlung des Werkzeugs zu verringern und dabei gleichzeitig die Kühlung unterschiedlich langer Werkzeuge, in der Regel Bohrer, sicherzustellen.

### Darstellung der Erfindung

Gemäß der Erfindung weist ein zahnärztliches Instrument, mit einem aktiven Werkzeug zur Bearbeitung von insbesondere Zahnhartsubstanz, bei dem zur Kühlung der Präparationsstelle eine Flüssigkeit verwendet wird, welche auf die Präparationsstelle ausgerichtet von einer Düsenanordnung abgegeben wird, wobei die Düsenanordnung über den Umfang verteilte, einzelne oder zusammenhängende Austrittsöffnungen für das flüssige Kühlmittel aufweist und wobei der Volumenanteil an Kühlluft vernachlässigbar oder sogar null ist und wobei jede Austrittsöffnung einen Austrittswinkel für einen Flüssigkeitsstrahl aufweist, wobei über den Umfang der Düsenanordnung gesehen mindestens zwei Austrittsöffnungen voneinander verschiedene Austrittswinkel aufweisen.

Aufgrund des unterschiedlichen Austrittswinkels treffen die an unterschiedlichen Stellen über den Umfang verteilt austretenden Wasserstrahlen an zu einander beabstandeten Stellen des Werkzeugs auf, so dass das Werkzeug selbst entlang seiner Bearbeitungsfläche an mindestens zwei in Längsrichtung zueinander beabstandeten Stellen und aus unterschiedlicher Richtung mit Flüssigkeit benetzt und gekühlt wird.

Dadurch, dass die Düsenanordnung eine Vielzahl von Austrittsöffnungen aufweist und jede Austrittsöffnung gegenüber den anderen einen anderen Strahlungswinkel aufweist, lassen sich mit einer geringen Anzahl von Austrittsöffnungen unterschiedliche Werkzeuglänge-Abstufungen mit Kühlflüssigkeit benetzen.

Werden mindestens zwei, vorzugsweise drei Gruppen von jeweils mindestens zwei Austrittsöffnungen mit jeweils gleichem Austrittswinkel vorgesehen, so wird selbst dann, wenn ein Strahl abgelenkt wird an der entsprechenden Werkzeuglänge Kühlflüssigkeit zugeführt.

Vorzugsweise umfasst die Gruppe zwei Austrittsöffnungen, die um 180 Grad versetzt angeordnet sind.

Diese Anordnung hat den Vorteil, dass durch den größtmöglichen Versatz der Düsen zueinander bei der Abdeckung eines Kühlmittelstrahls der jeweils gegenüberliegende Kühlmittelstrahl das Werkzeug benetzt, so dass trotz der Abschattung einer Düse eine ausreichende Kühlung sichergestellt ist.

Mit einer Düsenanordnung, welche Austrittsöffnungen mit einem derartigen Austrittswinkel aufweist, dass alle üblichen Bohrerlängen (zur Zeit EN 150 3823-1)von mindestens einer Austrittsöffnung im Arbeitsbereich benetzt werden, ist bei einem Austausch der Werkzeuges durch ein Werkzeug anderer Länge sicher gestellt, dass eine Kühlung stattfindet. Als Werkzeug werden im Dentalbereich in der Regel Fräser bzw. Schleifstifte verwendet.

Besonders vorteilhaft ist es, wenn mindestens zwei, vorzugsweise drei Austrittsöffnungen eine Werkzeuglänge-Abstufung benetzen, da in diesem Fall unabhängig von der tatsächlich verwendeten Werkzeuglänge stets mehrere Kühlmittelstrahlen auf das Werkzeug gerichtet sind.

Vorteilhafterweise sind die Austrittswinkel so gewählt, dass das Verhältnis von Abstand zum Austritt des Bohrers aus dem Kopfgehäuse zum Radius des verwendeten Bearbeitungswerkzeugs zwischen 3 und 25 liegt. Bei einem Bohrer von 1,6 mm Durchmesser und in einem Abstand von 2,8 mm ergibt sich bei einem 3,57 mm entfernten Auftreffpunkt des Kühlmittelstrahls auf die Mantelfläche des Bearbeitungswerkzeugs ein Winkel von 35°. Bei einem dicken Bearbeitungswerkzeug mit einem Durchmesser von 2,35 mm ergibt sich für den selben Winkel von 35° ein Auftreffpunkt des Kühlmittelstrahls in einem Abstand von 1,975 mm vom Kopfgehäuse.

Zweckmäßiger Weise liegen die Austrittsöffnungen in einem gemeinsamen Düsenring, so dass die Herstellung der Austrittsöffnungen mit den erforderlichen Austrittswinkeln unabhängig vom zahnärztlichen Instrument erfolgen kann.

Vorteilhafter Weise ist der Düsenring austauschbar, so dass im Falle von Verstopfungen einzelner Austrittsöffnungen durch Fremdkörper oder durch Verkalkung die Funktionsfähigkeit des zahnärztlichen Instruments wieder hergestellt werden kann.

Der Düsenring kann in verschiedene Positionen drehbar sein und kann dort über eine Arretiervorrichtung in seiner jeweiligen Lage festgehalten sein, wodurch eine individuelle Einstellung der verwendeten Austrittswinkel möglich ist.

Gemäß einer Weiterbildung ist es vorgesehen, dass die Düsenanordnung Mittel zum Abdecken und/oder Freigeben von Austrittsöffnungen aufweist, so dass unterschiedliche Kombinationen von Austrittsöffnungen mit Austrittswinkeln einstellbar sind und dass einzelne und/oder mehrere Austrittsöffnungen zu- und abschaltbar sind. Hierdurch ist es möglich, das zahnärztliche Instrument gezielt an die jeweils verwendete Werkzeuglänge anzupassen, wodurch die erforderliche Menge von Kühlflüssigkeit auf das jeweilige Werkzeug abgestimmt ist.

Dazu geben vorteilhafter Weise die Mittel nur eine begrenzte Anzahl von Austrittsöffnungen frei, nämlich diejenigen, die für die Kühlung der jeweiligen Werkzeuglänge benötigt werden.

Diese Mittel können aus einem Abdeckring bestehen, welcher zum einen mit Durchbrechungen für die jeweils freigegebene Austrittsöffnung versehen ist und andererseits ein Verschluß für die abzudeckende Austrittsöffnungen darstellt.

Gemäß einer Weiterbildung kann die Austrittsöffnung als umlaufender Ringspalt mit sich kontinuierlich oder stufenförmig änderndem Austrittswinkel ausgebildet sein, wo-durch ein das Werkzeug angebender Wassermantel entsteht. Dieser Ringspalt kann wiederum in Teilbereichen über eine Abdeckscheibe abgedeckt sein, so dass nur den jeweilige Austrittswinkel im Bereich der Öffnung der Abdeckscheibe zur Wirkung kommt. Die Öffnung in der Abdeckscheibe hat dabei keinen wesentlichen Einfluß auf den Austrittswinkel.

Um die Menge der eingesetzten Kühlflüssigkeit weiter zu verringern kann der Strahl als gepulster Strahl ausgebildet sein.

Dies führt bei Beibehaltung der gewünschten und erforderlichen Strömungsgeschwindigkeit zu einer Mengenreduzierung, so dass größere Düsendurchmesser verwendet werden können. Dadurch wird die Gefahr der Verstopfung der Düse verringert.

Nachfolgend werden anhand der Zeichnung einige Ausführungsformen der Erfindung näher beschrieben.

### Kurzbeschreibung der Zeichnung

In der Zeichnung sind verschiedene Ausführungsbeispiele der Erfindung dargestellt. Es zeigt die:
- Fig. 1: einen Teilschnitt durch ein Kopfgehäuse eines zahnärztlichen Handstücks in Längsrichtung;
- Fig. 2: eine Ansicht von unten auf das Kopfgehäuse gemäß Fig. 1;
- Fig. 3: ein Prinzipbild über den Zusammenhang zwischen Austrittswinkel und Auftreffpunkt eines Wasserstrahls auf ein Werkzeug;
- Fig. 4: einen Düsenring mit sechs Austrittsöffnungen in Draufsicht;
- Fig. 5a: ein Schnitt entlang der Linie AA aus Fig. 4 als Teilschnitt;
- Fig. 5b: einen Teilschnitt entlang der Linie BB aus Fig. 4;
- Fig. 5c: einen Schnitt entlang der Linie C-C aus Fig. 4;
- Fig. 6: ein Kopfgehäuse mit einem verdrehbaren Abdeckring für einzelne Austrittsöffnungen, außenseitig oder innenseitig angeordnet;
- Fig. 7a: eine Draufsicht auf die Düsenanordnung aus Fig. 6 mit einem ersten geöffneten Düsenpaar, die
- Fig. 7b: eine Draufsicht auf die Düsenanordnung aus Fig. 6 mit einem verdrehten Abdeckring und einem zweiten Düsenpaar, die
- Fig. 8: einen Teilschnitt durch ein Kopfgehäuse mit einem teilweise abgedeckten Ringspalt als Austrittsöffnung und die
- Fig. 9: einen Teilschnitt durch eine Variante eines Ringspaltes gemäß Fig. 8.

### Ausführungsbeispiel der Erfindung

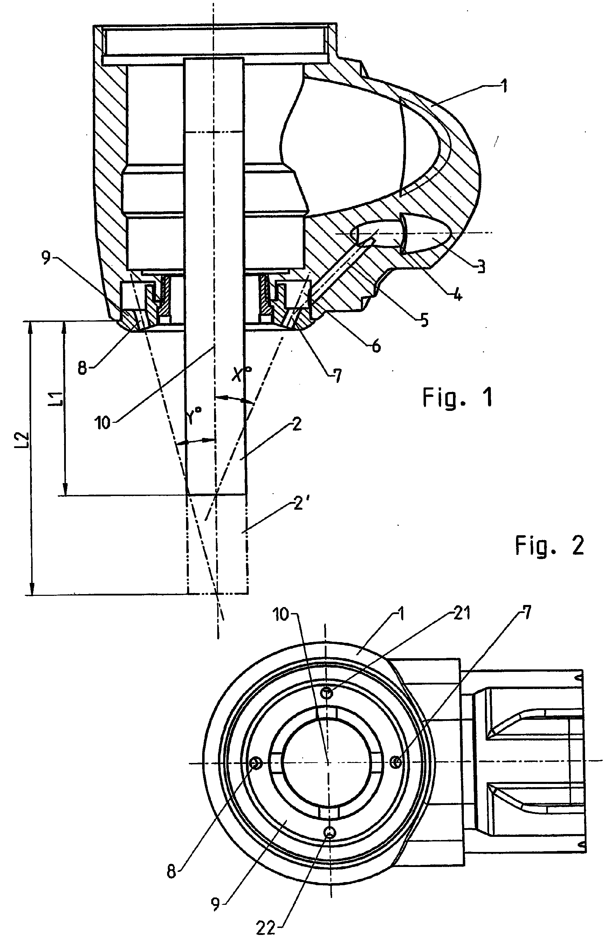

In Fig. 1 ist das Kopfgehäuse 1 eines zahnärztlichen Handstücks in Seitenansicht mit einem Teilschnitt im Bereich des Austritts eines Werkzeugs 2 gezeigt. Das Werkzeug 2 ist beispielsweise ein Bohrer mit einer ersten Länge L1, gemessen bezüglich der Unterkante des Kopfteils 1. Innerhalb des Kopfteils 1 ist eine Zuführung 3 eine Kühlflüssigkeit, in der Regel für Kühlwasser vorgesehen, welche mit innerhalb des Handstücks liegenden Versorgungsleitungen 3 in Verbindung steht und über einen nicht dargestellten Versorgungsschlauch mit Kühlwasser versorgt wird.

Von einer mit der Versorgungsleitung 3 verbundenen ersten Kammer 4 zweigt ein Verbindungskanal 5 zu einem Ringraum 6 ab, der innerhalb des Kopfgehäuses 1 das Werkzeug 2 umgebend angeordnet ist. Der Ringraum 6 ist durch einen Austrittsöffnungen 7, 8 aufweisenden Düsenring 9 werkzeugseitig verschlossen.

Die Austrittsöffnung 7 ist gegenüber einer Mittelachse 10 des Werkzeugs 2 in einem Winkel X ausgerichtet, so dass ein aus der Austrittsöffnung 7 austretender Wasserstrahl in einer Entfernung L1 auf die Mantelfläche des Werkzeugs 2 auftrifft. Die Austrittsöffnung 8 ist ebenfalls gegenüber der Mittelachse 10 schräg angeordnet, jedoch um einen Winkel Y, der von X verschieden ist. Im konkreten Fall ist Y größer als X, so dass der aus der Austrittsöffnung 8 austretende Wasserstrahl in größerem Abstand L2 zum Kopfgehäuse 1 auf das Werkzeug 2 auftrifft. Dadurch ist es möglich, auch ein verlängertes Werkzeug 2' mit einer freien Länge L2 über den gesamten Bereich zu kühlen. Aufgrund der gewählten Winkel X, Y kann dafür Sorge getragen sein, dass jeder Wasserstrahl auf das Werkzeug auftrifft, also auch bei einer geringeren freien Länge L1.

In Fig. 2 ist eine Draufsicht auf das Kopfgehäuse 1 bei entferntem Werkzeug gezeigt. Zu erkennen ist der Düsenring 9 für die dahinter befindliche, nicht dargestellte Ringnut 6 sowie die Austrittöffnungen 7, 8 und zwei weitere Austrittsöffnungen 21, 22, die zwischen den Austrittöffnungen 7, 8 angeordnet sind. Aus den Austrittöffnungen 21, 22 tritt das Wasser ebenfalls als gerichteter Strahl in einem Winkel zu der Mittelachse 10 aus, wobei der jeweilige Austrittswinkel wiederum von dem Winkel X bzw. Y verschieden sein kann. Anstelle der gezeigten Ausführungsform ist es selbstverständlich möglich, zwei Gruppen von Austrittsöffnungen mit jeweils gleichem Austrittswinkel vorzusehen, wobei der Austrittswinkel einer Gruppe jedoch von dem Austrittswinkel der anderen Gruppe unterschiedlich ist.

Grundsätzlich sind die Austrittsöffnungen 7, 8, 21, 22 so ausgebildet, dass ein gerichteter Wasserstrahl austritt, dessen Strömungsgeschwindigkeit so hoch ist, dass der durch die Rotation des Werkzeugs entstehende Luftmantel durchstoßen wird. Die Austrittsöffnungen 7, 8 sind in ihrer Geometrie dementsprechend zu gestalten. Unter Umständen reicht es, wenn nur eine Seitenwand der Austrittsöffnung in einem Winkel zur Mittelachse des Werkzeugs steht, so lange der austretende Wasserstrahl in dem gewünschten Winkel austritt.

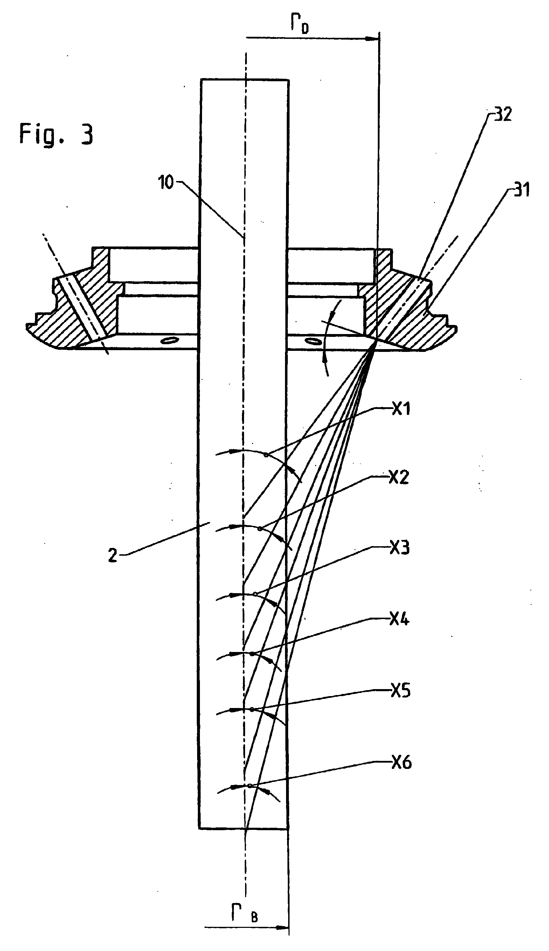

In Fig. 3 ist ein Düsenring 31 dargestellt, aus welchem Kühlflüssigkeit auf ein diamantiertes Werkzeug 2 in Form eine Schleifers abgegeben wird, wobei die Diamantierung sich nur über eine Teillänge des Werkzeugs 2 erstreckt.

Das Werkzeug 2 weist einen Radius R_{B} auf und die Austrittsöffnung 32 ist in einem Abstand R_{D} zur Mittelachse 10 angeordnet.

Aus der Prinzipskizze lässt sich erkennen, dass mit einem entsprechend ausgebildeten Düsenring 31 durch eine beispielhaft dargestellte Austrittsöffnung 32 aus einer Anzahl von sechs Austrittsöffnungen
mit unterschiedlichen Austrittswinkeln X1-X6 das Werkzeug an unterschiedlichen Stellen in einem Abstand zu der Unterseite des Kopfgehäuses, hier gebildet durch die dem Werkzeug zugewandte Seite des Düsenrings 31, mit dem Wasserstrahl benetzt wird, wobei ein zahnärztliches Instrument auch mit einem austauschbaren Düsenring ausgestattet sein kann, welcher nur zwei oder drei Paare von Austrittöffnungen mit unterschiedlichem Austrittswinkel aufweisen. Der Düsenring kann dabei austauschbar sein, so dass bei Verwendung von Werkzeugen mit anderen Abmessungen eine Anpassung des Wasserstrahls an das Werkzeug möglich ist.

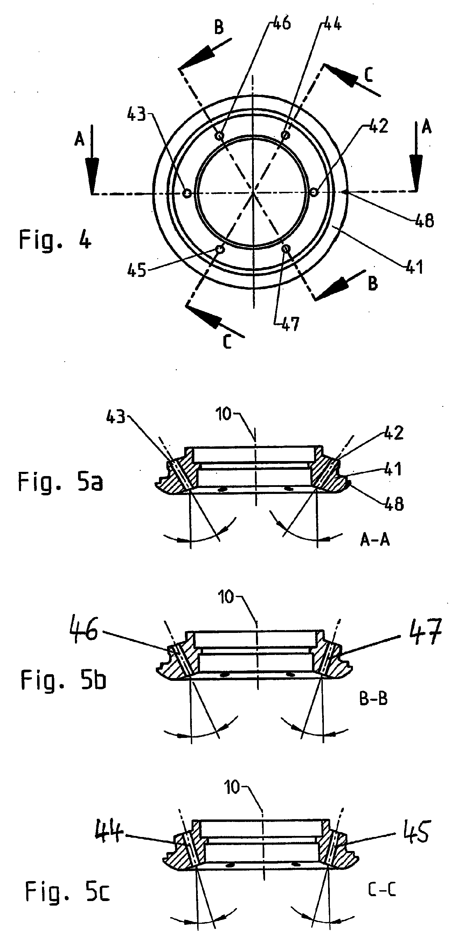

In Fig. 4 ist eine Draufsicht auf einen Düsenring 41 gezeigt, der sechs Austrittöffnungen 42 bis 47 gezeigt, wobei zusätzlich eine Markierung 48 zur lagegerechten Positionierung des Düsenrings 41 vorgesehen ist. Alle Austrittöffnungen 42-47 weisen unterschiedliche Austrittswinkel X1-X6 auf, wie dies im Folgenden in den Fig. 5a bis d erläutert ist.

In Fig. 5a ist ein Teilschnitt durch den Düsenring 41 im Bereich AA aus Fig. 4 dargestellt, wobei die Austrittöffnung 42 unter einem Winkel X1 von 36° zur Mittelachse 10 des Werkzeugs angeordnet ist. Wesentlich für die konkrete Ausgestaltung der Austrittöffnung 42 ist jedoch die Austrittsrichtung des Wasserstrahls, so dass auch abweichende Geometrien verwendet werden können, so lange der Wasserstrahl in dem gewünschten Winkel austritt. In den Fig. 5b bis 5c sind für die Austrittsöffnungen 43 bis 47 entsprechend der jeweiligen Schnitte B bis F Winkel X2-X6 von 36°, 28°, 23°, 20°, 17° und 15° angegeben, die den Winkelverhältnissen gemäß Fig. 3 entsprechen.

Es ist unmittelbar ersichtlich, dass die zu wählenden Winkel einerseits von dem Durchmesser des Werkzeugs und andererseits von dem Abstand der Austrittsöffnungen zur Mantelfläche des Werkzeugs abhängen. Die Winkel sind so zu wählen, dass das Verhältnis aus Abstand des Auftreffpunkts des Kühlmittelstrahls auf die Mantelfläche des Werkzeugs bezogen auf den Radius des Bearbeitungswerkzeugs zwischen 3 und 25 liegt.

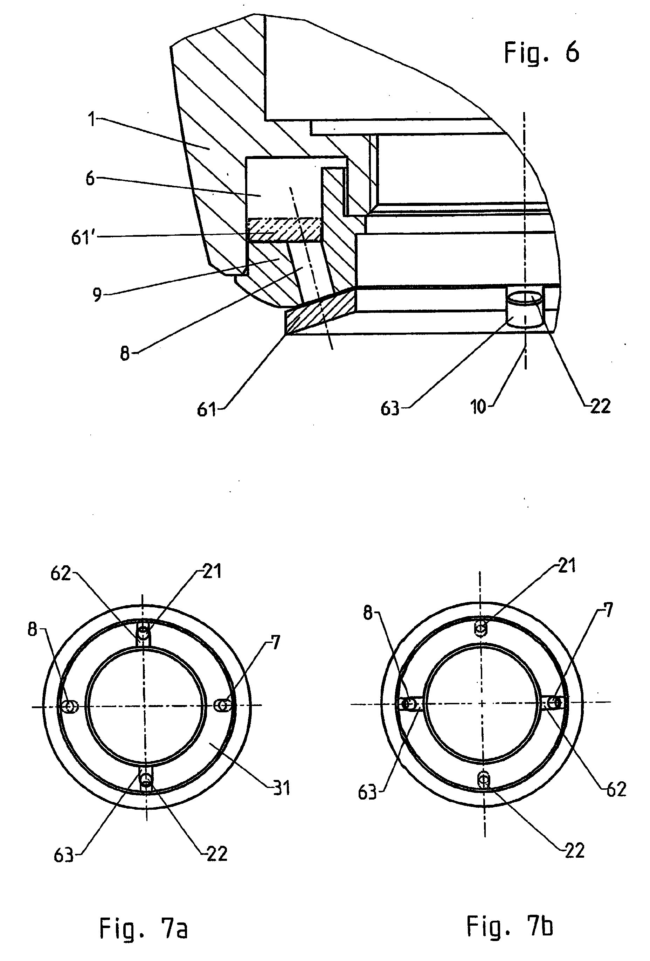

In Fig. 6 ist an der Düsenanordnung zusätzlich ein Abdeckring 61 angebracht und drehbar gehalten, der die Austrittsöffnung 8 in dem Düsenring 9 bedarfsweise verschließt, so dass das im Ringraum 6 befindliche Wasser nicht aus der Austrittsöffnung 8 austreten kann. Der Abdeckring 61 weist gleichwohl Durchbrechungen 63 auf, die weitere Austrittöffnungen 22 freigeben, so dass nur ein Teil der insgesamt vorgesehen Austrittsöffnungen 7, 8, 21, 22 abgedeckt ist und Wasserstrahlen aus den anderen Austrittöffnungen 21, 22 austreten können. Dies ist am Beispiel der Austrittöffnung 22 dargestellt. Anstelle eine außenliegenden Abdeckrings 61 kann ein innenliegender Ring 61' verwendet werden, der gestrichelt dargestellt ist. Der Ring 61 kann mit einer Arretierung versehen sein, um ein unbeabsichtigtes Verschließen der Öffnungen beim Betrieb zu vermeiden. Darüber hinaus kann eine Markierung vorgesehen sein, aus welcher die Stellung des Ringes eindeutig hervorgeht.

In Fig. 7a ist die in Fig. 6 dargestellte Lageanordnung des Abdeckrings 61 wiedergegeben, wobei die Austrittöffnungen 7, 8 abgedeckt sind und die Austrittöffnungen 21, 22 freigegeben sind. Dazu weist der Abdeckring 61 Ausnehmungen 62, 63 auf.

In Fig. 7b ist der Abdeckring 31 um 90° verdreht, so dass nun die Austrittöffnungen 7, 8 im Bereich der Ausnehmungen 62, 63 liegen und der Wasserstrahl somit aus diesen Austrittöffnungen abgegeben werden kann. Die Austrittöffnungen 21, 22 hingegen sind verschlossen.

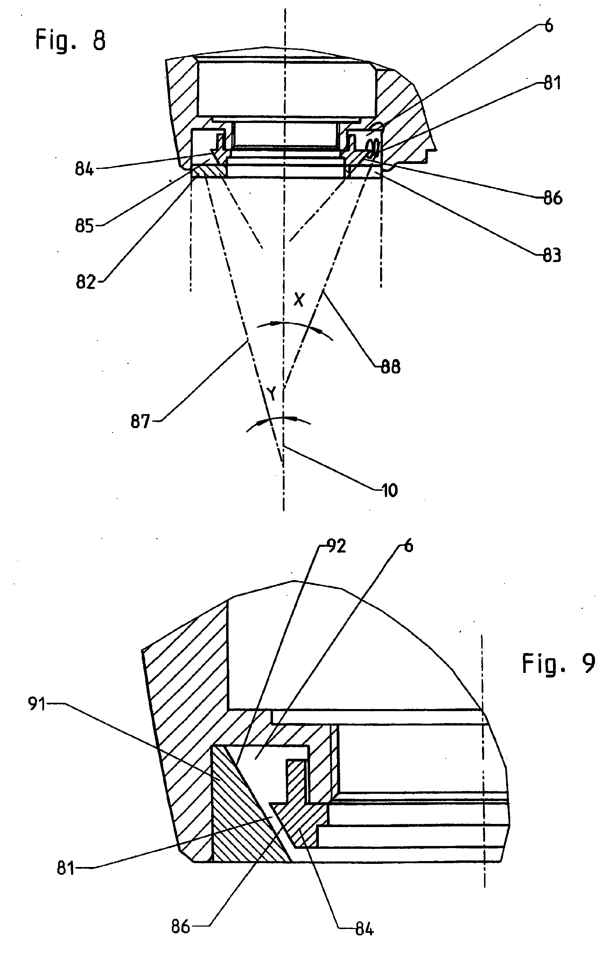

In Fig. 8 ist eine weitere Ausführungsform als Teilschnitt durch ein Kopfgehäuse mit einem teilweise abgedeckten Ringspalt 81 gezeigt, wobei der Ringspalt 81 durch eine Abdeckscheibe 82 zumindest teilweise verschlossen ist. Der Abdeckring 82 weist über den Umfang verteilt angeordnete Öffnungen 83 auf, die den Ringspalt 81 frei geben. Der Ringspalt 81 wird einerseits von der äußeren Seitenwand des Ringraums 6 und einem Düsenring 84 begrenzt, wobei der Düsenring 84 im Bereich des Ringspalts 81 eine Schrägfläche 85, 86 aufweist.

Die Schrägflächen 85, 86 sind über den Umfang des Düsenrings 84 in Ihrer Winkellage unterschiedlich ausgebildet, so dass sich die Austrittswinkel der Wasserstrahlen über den Umfang gesehen unterscheiden.

In der Skizze wird davon ausgegangen, dass der austretende Wasserstrahl entlang einer Winkelhalbierenden 87, 88 verläuft, die durch die äußere Seitenwand des Ringraums 6 einerseits und die Schrägfläche 85 bzw. 86 eingeschlossenen Winkel halbiert. Die Winkelberechnung ist durch die gepunkteten Linien schematisch skizziert.

Durch Verdrehen des Abdeckrings können unterschiedliche Austrittswinkel X, Y eingestellt werden, wobei die Schrägflächen 85, 86 kontinuierlich in ihrer Winkellage verändert sein können oder aber in Stufen.

In Fig. 9 ist eine andere Ausbildung des Ringspalts 81 dargestellt. In dem Ringraum 6 ist Begrenzungsring 91 eingesteckt oder eingeschraubt, der eine dem Inneren des Ringraums 6 zugewandte Schrägfläche 92 aufweist, welche mit einer Schrägfläche 86 des Düsenrings 84 den Ringspalt 81 begrenzt. Sowohl die Schrägfläche 92 als auch die Schrägfläche 86 können bezüglich Ihrer Schrägstellung über den Umfang unterschiedlich sein. Darüber hinaus ist es möglich, durch eine entsprechende Ausgestaltung des Begrenzungsrings den Ringspalt 81 teilweise zu verschließen, so dass nur in bestimmten Bereichen über den Umfang des Ringspalts Kühlflüssigkeit als gerichteter Strahl oder Mantel austritt.

### Bezugszeichenliste

- 1: Kopfteil
- 2: Werkzeug
- 3: Zuführung für Kühlwasser
- 4: erste Kammer
- 5: Verbindungskanal 5
- 6: Ringraum
- 7: Austrittsöffnung
- 8: Austrittsöffnung
- 9: Düsenring
- 10: Mittelachse
- 21: Austrittsöffnung
- 22: Austrittsöffnung
- 23: Kupplungsteil, Kupplungselement
- 24: Verstellvorrichtung
- 25: Feder
- 41: Düsenring
- 31: Düsenring
- 32: Austrittsöffnung
- 42: Austrittsöffnung
- 43: Austrittsöffnung
- 44: Austrittsöffnung
- 45: Austrittsöffnung
- 46: Austrittsöffnung
- 47: Austrittsöffnung
- 48: Markierung
- 61: Abdeckring, außenliegend
- 61': Abdeckring, innenliegend
- 62: Ausnehmung
- 63: Ausnehmung
- 81: Ringspalt
- 82: Abdeckring
- 83: Öffnung
- 84: Düsenring
- 85: Schrägfläche
- 86: Schrägfläche
- 91: Begrenzungsring
- 92: Schrägfläche
- L1: freie Länge des Bohrers
- L2: freie Länge des Bohrers
- x: Winkel
- X: Winkel

## Patentansprüche

1. Zahnärztliches Instrument, mit einem aktiven Werkzeug (2) zur Bearbeitung von insbesondere Zahnhartsubstanz, bei dem zur Kühlung der Präparationsstelle eine Kühlflüssigkeit verwendet wird, welche auf die Präparationsstelle ausgerichtet von einer Düsenanordnung (6-9) abgegeben wird, wobei die Düsenanordnung (6-9) über den Umfang verteilte, einzelne oder zusammenhängende Austrittsöffnungen (7,8, 21, 22) mit einem Austrittswinkel (X, Y) für einen Strahl der Kühlflüssigkeit aufweist und wobei der Volumenanteil an einem Kühlgas vernachlässigbar oder sogar Null ist, **dadurch gekennzeichnet, dass** über den Umfang der Düsenanordnung (6,9) gesehen mindestens zwei Austrittsöffnungen voneinander verschiedene Austrittswinkel aufweisen.

2. Zahnärztliches Instrument nach Anspruch 1, **dadurch gekennzeichnet, dass** die Düsenanordnung eine Vielzahl von Austrittsöffnungen (7,8) aufweist und jede Austrittsöffnung gegenüber den anderen einen anderen Austrittswinkel (X,Y) aufweist.

3. Zahnärztliches Instrument nach Anspruch 1, **dadurch gekennzeichnet, dass** mindestens zwei, vorzugsweise drei Gruppen von jeweils mindestens zwei Austrittsöffnungen (7, 8; 21,22) mit jeweils gleichem Austrittswinkel vorgesehen sind.

4. Zahnärztliches Instrument nach Anspruch 3, **dadurch gekennzeichnet, dass** eine Gruppe zwei Austrittsöffnungen (7,8; 21,22) umfasst, die um 180 Grad versetzt angeordnet sind.

5. Zahnärztliches Instrument nach einem der Ansprüche 1 bis 4, **dadurch gekennzeichnet, dass** die Düsenanordnung Austrittsöffnungen (7,8) mit einem derartigen Austrittswinkel (X, Y) aufweist, dass alle üblichen Werkzeuglängen von mindestens einer Austrittsöffnung (7,8) im Arbeitsbereich benetzt werden.

6. Zahnärztliches Instrument nach Anspruch 5, **dadurch gekennzeichnet, dass** mindestens zwei, vorzugsweise drei Austrittsöffnungen (7,8; 21,22)eine Werkzeuglänge-Abstufung benetzen.

7. Zahnärztliches Instrument nach einem der Ansprüche 1 bis 6, **dadurch gekennzeichnet, dass** das Verhältnis des Abstandes der Auftrittsstelle des Kühlmittelstrahls vom Kopfgehäuse auf die Mantelfläche des Werkzeugs und dem Radius der Mantelfläche zwischen 3 und 25 beträgt.

8. Zahnärztliches Instrument nach einem der Ansprüche 1 bis 7, **dadurch gekennzeichnet, dass** die Austrittsöffnungen (7,8)auf einem gemeinsamen Düsenring (9; 41) angeordnet sind.

9. Zahnärztliches Instrument nach Anspruch 8, **dadurch gekennzeichnet, dass** der Düsenring (9; 41) austauschbar ist.

10. Zahnärztliches Instrument nach Anspruch 8 oder 9, **dadurch gekennzeichnet, dass** der Düsenring (41) in verschiedene Positionen drehbar ist und insbesondere über eine Arretiervorrichtung (48) in seiner jeweiligen Lage festgehalten ist.

11. Zahnärztliches Instrument nach Anspruch 1, **dadurch gekennzeichnet, dass** die Düsenanordnung Mittel (61, 61',62,63) zum Abdecken und/oder Freigeben von einzelnen und/oder mehreren Austrittsöffnungen (7,8,21,22) aufweist, so dass unterschiedliche Kombinationen von Austrittsöffnungen (7,8,21,22) mit Austrittswinkeln einstellbar sind.

12. Zahnärztliches Instrument nach Anspruch 11, **dadurch gekennzeichnet, dass** die Mittel (61-63) nur eine begrenzte Anzahl von Austrittsöffnungen (7,8,21,22) frei geben, die für die Kühlung einer bestimmten Werkzeuglänge benötigt wird.

13. Zahnärztliches Instrument nach einem der Ansprüche 1 bis 12, **dadurch gekennzeichnet, dass** die Austrittsöffnung als umlaufender Ringspalt (81) mit sich kontinuierlich oder stufenförmig änderndem Austrittswinkel ausgebildet ist.

14. Zahnärztliches Instrument nach Anspruch 13, **dadurch gekennzeichnet, dass** der Ringspalt (81) in Teilbereichen über eine Öffnungen (83) aufweisende Abdeckring (82) abgedeckt ist.

15. Zahnärztliches Instrument nach einem der Ansprüche 1 bis 14, **dadurch gekennzeichnet, dass** der Strahl ein gepulster Strahl ist.
